# DEMANDE DE BREVET EUROPEEN

(11) **EP 3 971 785 A1**
(43) Date de publication de la demande: **23.03.2022**
(21) Numéro de dépôt: 21197825.9
(22) Date de dépôt: 20.09.2021
(51) Int. Cl.: G06N 3/04, G06N 3/063

(54) **CALCULATEUR ÉLECTRONIQUE DE MISE EN OEUVRE D'UN RÉSEAU DE NEURONES ARTIFICIELS, AVEC BLOCS DE CALCUL DE PLUSIEURS TYPES**

(30) Priorité: 22.09.2020 FR 2009595
(71) Demandeur: COMMISSARIAT À L'ÉNERGIE ATOMIQUE ET AUX ÉNERGIES ALTERNATIVES, 75015 Paris (FR)
(72) Inventeur: LORRAIN, Vincent, 91191 GIF SUR YVETTE CEDEX (FR); BICHLER, Olivier, 91191 GIF SUR YVETTE CEDEX (FR); BRIAND, David, 91191 GIF SUR YVETTE CEDEX (FR); THIELE, Johannes Christian, 91191 GIF SUR YVETTE CEDEX (FR)
(74) Mandataire: Lavoix

(57) **Abrégé**

Ce calculateur électronique comprend plusieurs blocs électroniques de calcul (14), chacun étant configuré pour mettre en œuvre une ou plusieurs couches de traitement respectives d'un réseau de neurones artificiels.

Les blocs de calcul (14) sont d'au moins deux types différents parmi :
- un premier type (TOPF) avec topologie figée, opération figée et paramètres figés,
- un deuxième type (TOF) avec topologie figée, opération figée et paramètres modifiables, et
- un troisième type (TOPP) avec topologie modifiable, opération modifiable et paramètres modifiables.

Pour chaque couche de traitement mise en œuvre par le bloc de calcul (14) respectif, la topologie est une topologie de connexion pour chaque neurone artificiel ; l'opération est un type de traitement à effectuer pour chaque neurone artificiel ; et les paramètres comportent des valeurs aptes à être déterminées via un apprentissage du réseau de neurones, telles qu'une valeur de poids et/ou une valeur de biais pour chaque neurone.

## Description

La présente invention concerne un calculateur électronique configuré pour mettre en œuvre un réseau de neurones artificiels comportant plusieurs couches de traitement, le calculateur comprenant plusieurs blocs électroniques de calcul, chacun étant configuré pour mettre en œuvre une ou plusieurs couches de traitement respectives.

L'invention concerne le domaine de l'architecture de calculateurs électroniques de mise en œuvre de réseaux de neurones artificiels, aussi notés ANN (de l'anglais *Artificial Neural Networks).*

De tels calculateurs offrent alors, via la mise en œuvre de ces réseaux de neurones, de nombreuses applications, telles qu'à titre d'exemple la classification ou l'identification d'objets préalablement détectés par un détecteur d'objets, permettant par exemple d'apprendre les identités de personnes dont le visage a été détecté par un détecteur de visages. Une autre exemple d'application est l'apprentissage automatique et non-supervisé de caractéristiques, telles que des caractéristiques de voix humaines, et les caractéristiques apprises sont ensuite utilisées pour prétraiter des données pour l'apprentissage spécialisé sur la voix d'une personne.

L'invention concerne en particulier le domaine des réseaux de neurones profonds, aussi notés DNN (de l'anglais *Deep Neural Networks).* Dans ce domaine, une des topologies les plus utilisées est le réseau de neurones convolutionnel, également appelé réseau de neurones convolutifs.

Les réseaux de neurones convolutionnel, aussi notés CNN (de l'anglais *Convolutional Neural Networks),* sont aujourd'hui des structures calculatoires classiques dans le traitement des images. De nombreuses solutions de calculateurs électroniques existent pour chercher à effectuer une optimisation matérielle lors de l'inférence et l'apprentissage de tels réseaux de neurones, et sont présentées ci-après selon leur approche générale du calcul.

Des solutions calculatoires génériques regroupent des calculateurs CPU (de l'anglais *Central Processing Unit),* GPU (de l'anglais *Graphics Processing Unit),* qui ne sont pas spécialisés exclusivement dans la mise en œuvre de réseaux de neurones. Ces solutions sont grandement utilisées pour l'exploration des réseaux, mais leurs généricité et complexité ne leur permettent pas d'atteindre une performance par watt suffisante pour des applications contraintes, telles que des applications dites d'informatique en périphérie (de l'anglais *edge computing).* La solution la plus évoluée dans le domaine des GPU est actuellement développée par la société NVIDIA^{®} via sa librairie TensorRT^{™}, et elle consiste à optimiser le réseau de neurones dynamiquement pour les opérateurs du GPU, puis à geler le réseau optimisé.

Cependant, cette approche n'offre pas une flexibilité de l'application une fois optimisée pour le GPU.

Des solutions dédiées à topologie programmable comprennent des calculateurs programmables spécialisés, tels que Nervana^{™} NNP-I (pour *Neural Network Processors)* de la société Intel^{®}, TPU (pour *Tensor Processing Unit)* de la société Alphabet Inc, FPGA (de l'anglais *Field Programmable Gate Array)* avec unités souples de traitement de DNN - ou Soft DPU (de l'anglais *Soft DNN Processing Unit)* - de la société XILINX^{®}, etc. Ces calculateurs programmables spécialisés comportent alors généralement un cœur de calcul étudié et optimisé pour les réseaux de neurones (TPU, Soft DPU). Ce cœur est utilisé récursivement pour traiter le réseau, et est reconfiguré en fonction de la couche de traitement considérée. Cette approche permet d'atteindre une bonne performance par watt.

Cependant, ces solutions dédiées à topologie programmable posent plusieurs problèmes. Premièrement, les ressources de ces calculateurs doivent être allouées judicieusement en fonction des couches de traitement considérées, ce qui est complexe ; et souvent le taux d'utilisation de modules de calcul au sein de ces calculateurs n'est pas optimal. Deuxièmement, la majorité de ces calculateurs utilise une mémoire externe de type DDR (de l'anglais *Double Data Rate),* et le temps de calcul n'est alors pas totalement prédictible engendrant des problèmes de criticités applicatives. Enfin, l'utilisation récursive des ressources de calcul induit de fortes latences, et ne permet alors pas l'utilisation d'une optimisation matérielle spécifique.

Des solutions calculatoires à topologie fixe existent également, surtout sous forme de FPGA. Le document WO 2020/043753 A1 décrit alors un exemple d'un tel calculateur à topologie fixe pour calculer une couche de convolution d'un réseau de neurones artificiels.

Cependant, si le réseau de neurones ou bien l'application évolue, alors cela nécessite de modifier tout le calculateur.

Le but de l'invention est donc de proposer un calculateur électronique amélioré pour la mise en œuvre de réseaux de neurones artificiels, notamment de réseaux de neurones convolutionnel CNN.

A cet effet, l'invention a pour objet un calculateur électronique configuré pour mettre en œuvre un réseau de neurones artificiels comportant plusieurs couches de traitement,
le calculateur comprenant plusieurs blocs électroniques de calcul, chacun étant configuré pour mettre en œuvre une ou plusieurs couches de traitement respectives,
les blocs de calcul étant d'au moins deux types différents parmi le groupe de types consistant en :
   - un premier type avec topologie figée, opération figée et paramètres figés,
   - un deuxième type avec topologie figée, opération figée et paramètres modifiables, et
   - un troisième type avec topologie modifiable, opération modifiable et paramètres modifiables,
pour la ou les couches de traitement mises en œuvre par le bloc de calcul respectif, la topologie étant une topologie de connexion pour chaque neurone artificiel de la ou des couches de traitement, l'opération étant un type de traitement à effectuer pour chaque neurone artificiel de la ou des couches de traitement, et les paramètres comportant des valeurs aptes à être déterminées via un apprentissage du réseau de neurones, telles qu'une valeur de poids et/ou une valeur de biais pour chaque neurone artificiel de la ou des couches de traitement.

Ainsi, le calculateur électronique selon l'invention offre une flexibilité hétérogène, avec ces blocs de calcul qui sont d'au moins deux types différents, et de préférence des trois types différents, parmi le premier type avec topologie figée, opération figée et paramètres figés ; le deuxième type avec topologie figée, opération figée et paramètres modifiables ; et le troisième type avec topologie modifiable, opération modifiable et paramètres modifiables.

Autrement dit, le calculateur électronique comprend un ensemble de blocs de calcul avec différentes caractéristiques de flexibilité, ce qui permet alors d'adapter l'architecture matérielle à différentes applications sans changement matériel.

Ce calculateur électronique est alors réalisable sous forme d'un ou plusieurs composants logiques programmables, tel qu'un ou plusieurs FPGA ; tout en étant également réalisable sous forme d'un ou plusieurs circuits intégrés dédiés, tel qu'un ou plusieurs ASIC (de l'anglais *Application-Specific Integrated Circuit).*

L'homme du métier comprendra donc que la structure du calculateur électronique selon l'invention n'est pas complètement paramétrable, mais contient des blocs de calcul de différents types qui sont plus ou moins paramétrables, et alors de préférence dédiés à certaines couches du réseau en fonction du besoin de paramétrage de chaque couche.

Cette flexibilité variable d'un bloc de calcul à l'autre permet en outre de fortes optimisations matérielles, telles que la simplification des opérateurs, la quantification des paramètres, etc.

De préférence, chaque bloc de calcul comporte au moins un module de calcul, et le calculateur électronique selon l'invention comprend en outre un multiplexeur connecté en sortie d'au moins deux modules de calcul distincts d'un même bloc de calcul ou bien de blocs de calcul distincts, notamment de blocs de calcul de types différents, et avantageusement en sortie de chacun des blocs de calcul de types différents, et avantageusement encore en sortie de chacun des modules de calcul des différents blocs de calcul, ce qui permet alors de récupérer les valeurs en sortie de différentes couches du réseau, et avantageusement encore en sortie de chacune des couches du réseau, et d'offrir ainsi une plus grande souplesse applicative.

Suivant d'autres aspects avantageux de l'invention, le calculateur électronique comprend une ou plusieurs des caractéristiques suivantes, prises isolément ou suivant toutes les combinaisons techniquement possibles :
- chaque bloc de calcul comporte au moins un module de calcul, et le calculateur comprend en outre un multiplexeur connecté en sortie d'au moins deux modules de calcul distincts, les modules de calcul en sortie desquels le multiplexeur est connecté étant des modules de calcul d'un même bloc de calcul ou bien de blocs de calcul distincts, notamment de blocs de calcul de types différents,
   le multiplexeur étant de préférence connecté en sortie de chacun des blocs de calcul de types différents ;
   le multiplexeur étant de préférence encore connecté en sortie de chacun des modules de calcul ;
   chaque module de calcul étant de préférence configuré pour mettre en œuvre une couche de traitement respective ;
- les blocs de calcul sont de trois types différents parmi le groupe de types consistant en : le premier type, le deuxième type et le troisième type ;
- les blocs de calcul de types différents sont connectés en cascade ;
- les blocs de calcul de types différents sont connectés suivant un ordre croissant des types, les types des blocs de calcul connectés en cascade étant de préférence successivement le premier type, le deuxième type et le troisième type,
   chaque bloc de calcul du premier type étant de préférence encore configuré pour mettre en œuvre une ou plusieurs couches initiales de traitement, chaque bloc de calcul du deuxième type étant configuré pour mettre en œuvre une ou plusieurs couches intermédiaires de traitement et chaque bloc de calcul du troisième type étant configuré pour mettre en œuvre une ou plusieurs couches finales de traitement, les couches initiales, intermédiaires et finales étant empilées dans cet ordre depuis l'entrée du réseau de neurones vers sa sortie ;
- le réseau de neurones est un réseau de neurones convolutifs, les couches de traitement sont chacune choisies parmi le groupe consistant en : couche de convolution, couche de mise en commun, couche de correction, couche entièrement connectée et couche de perte ; et chaque opération est alors choisie parmi le groupe consistant en : opération de convolution, opération de mise en commun, opération de correction, opération entièrement connectée et opération de perte ;
- le calculateur comprend en outre un bloc de prétraitement configuré pour transformer des données reçues en entrée du réseau de neurones et délivrer les données transformées à au moins un bloc de calcul ;
- le calculateur comprend en outre un bloc de post-traitement configuré pour transformer les données issues d'au moins un bloc de calcul en données délivrées en sortie du réseau de neurones ;
- le calculateur est réalisé sous forme d'un ou plusieurs composants logiques programmables, tel qu'un ou plusieurs FPGA ; et
- le calculateur est réalisé sous forme d'un ou plusieurs circuits intégrés dédiés, tel qu'un ou plusieurs ASIC,
au moins un circuit intégré dédié comportant un interposeur recevant plusieurs puces, et chaque bloc de calcul étant réalisé sous forme d'une puce respective.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

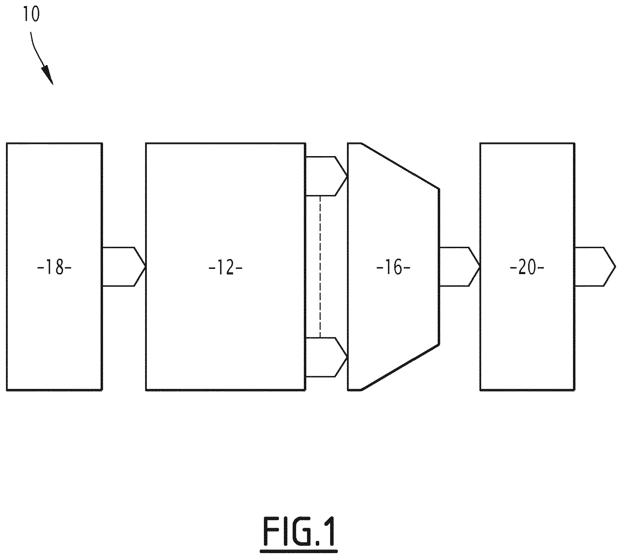

- la figure 1 est une représentation schématique d'un calculateur électronique selon l'invention, configuré pour mettre en œuvre un réseau de neurones artificiels comportant plusieurs couches de traitement, le calculateur comprenant un ensemble de blocs électroniques de calcul, chacun était configuré pour mettre en œuvre une ou plusieurs couches de traitement respectives ; le calculateur comprenant optionnellement un multiplexeur connecté en sortie de l'ensemble de blocs de calcul, ainsi qu'un bloc de prétraitement connecté en entrée de l'ensemble de blocs de calcul et un bloc de post-traitement connecté en sortie du multiplexeur ;
- la figure 2 est une représentation schématique de couches de traitement successives du réseau de neurones artificiels mis en œuvre par le calculateur électronique de la figure 1 ;
- la figure 3 est une représentation schématique plus détaillée de l'ensemble de blocs de calcul et du multiplexeur du calculateur électronique de la figure 1 selon un premier exemple de réalisation ;
- la figure 4 est une vue analogue à celle de la figure 2 pour un réseau de neurones dit résiduel ;
- la figure 5 est une vue analogue à celle de la figure 3, selon un deuxième exemple de réalisation ; et
- la figure 6 est une vue analogue à celle de la figure 3, selon un troisième exemple de réalisation.

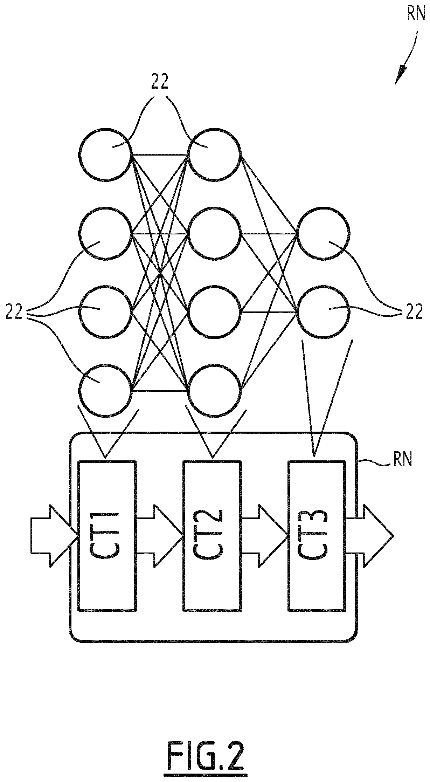

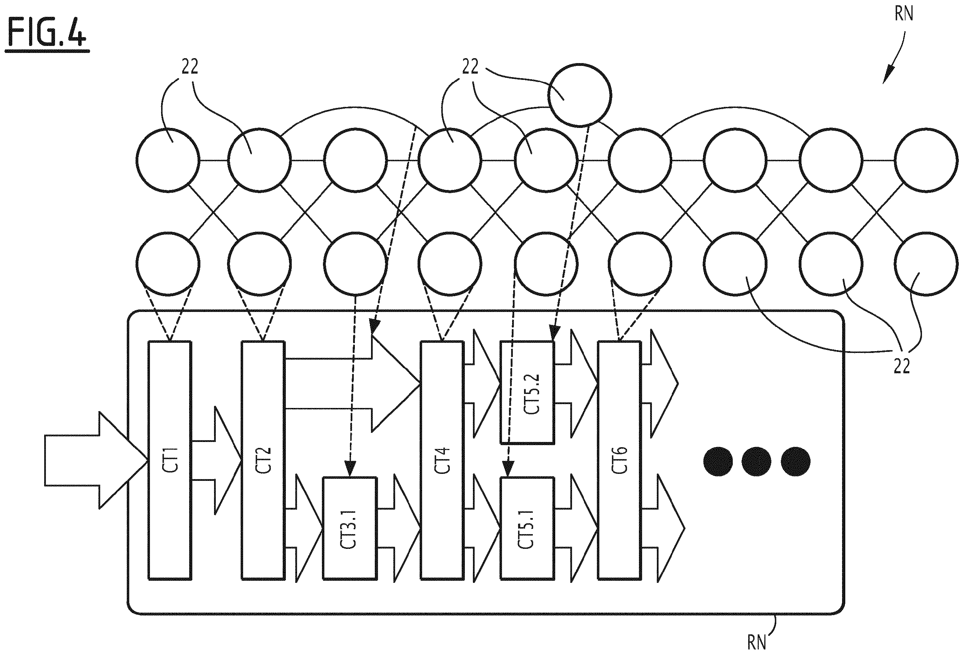

Sur la figure 1, un calculateur électronique 10 est configuré pour mettre en œuvre un réseau de neurones artificiels RN, visible sur la figure 2 et comportant plusieurs couches de traitement CTi, où i est un indice supérieur ou égal à 1. Dans l'exemple de la figure 2, l'indice est par exemple égal à 1, 2 et respectivement 3, avec des première CT1, deuxième CT2, et troisième CT3 couches de traitement représentées sur cette figure 2. Dans l'exemple de la figure 4, l'indice est par exemple égal à 1, 2, 3.1, 4, 5.1, 5.2 et respectivement 6, avec des couches de traitement CT1 ; CT2, CT3.1, CT4, CT5.1, CT5.2 et CT6 représentées sur cette figure 4.

Le calculateur électronique 10, visible sur la figure 1, comprend un ensemble 12 de plusieurs blocs électroniques de calcul 14, chaque bloc électronique de calcul 14 étant configuré pour mettre en œuvre une ou plusieurs couches de traitement CTi respectives.

En complément facultatif, le calculateur électronique 10 comprend en outre un multiplexeur 16 connecté en sortie de l'ensemble 12 de blocs de calcul 14.

En complément facultatif encore, le calculateur électronique 10 comprend en outre un bloc de prétraitement 18 connecté en entrée de l'ensemble 12 de blocs de calcul 14, et/ou un bloc de post-traitement 20 connecté en sortie du multiplexeur 16.

Le calculateur électronique 10 est par exemple réalisé sous forme d'un ou plusieurs composants logiques programmables, tels qu'un ou plusieurs FPGA (de l'anglais *Field Programmable Gate Array).*

En variante, le calculateur électronique 10 est réalisé sous forme d'un ou plusieurs circuits intégrés dédiés, tels qu'un ou plusieurs ASIC (de l'anglais *Application-Specific Integrated Circuit).* Selon cette variante, au moins un circuit intégré dédié comporte de préférence un interposeur recevant plusieurs puces électroniques, et chaque bloc de calcul 14 est réalisé sous forme d'une puce électronique respective.

La figure 2 illustre plusieurs couches de traitement CTi respectives et successives du réseau de neurones RN, avec i indice entier supérieur ou égal à 1, chaque couche de traitement respective CTi comportant, comme connu en soi, un ou plusieurs neurones artificiels 22, également appelé neurones formels.

À chaque neurone artificiel 22 est associé une topologie de connexion, c'est-à-dire un motif d'interconnexion du neurone 22 avec les éléments se trouvant en entrée dudit neurone 22 d'une part, et en sortie dudit neurone 22 d'autre part. À titre d'exemple, chaque neurone 22 de la première couche de traitement CT1 est connecté à son entrée à une ou plusieurs variables d'entrée, non représentées, du réseau de neurones RN, et à sa sortie à la couche de traitement successive, c'est-à-dire à la deuxième couche de traitement CT2, en particulier à un ou plusieurs neurones 22 de ladite deuxième couche de traitement CT2. Chaque neurone artificiel 22 d'une couche de traitement intermédiaire, telle que la deuxième couche de traitement CT2 dans l'exemple de la figure 2, est connecté en entrée à la couche de traitement précédente, en particulier à un ou plusieurs neurones artificiels 22 de ladite couche précédente, et en sortie à la couche de traitement suivante, en particulier à un ou plusieurs neurones artificiels 22 de ladite couche suivante. Enfin, chaque neurone artificiel 22 de la dernière couche de traitement, telle que la troisième couche de traitement CT3 dans l'exemple de la figure 2, est connecté en entrée à la couche de traitement précédente, c'est-à-dire à l'avant-dernière couche de traitement, en particulier à un ou plusieurs neurones artificiels 22 de ladite couche précédente, et en sortie à une ou plusieurs variables de sortie, non représentées, du réseau de neurones RN.

La topologie de connexion pour chaque neurone artificiel 22 définit alors, d'une part, le ou les éléments, à savoir variable(s) d'entrée ou neurone(s) 22 de la couche précédente, auxquels ledit neurone artificiel 22 est connecté en entrée ; et d'autre part, le ou les éléments, à savoir neurone(s) 22 de la couche suivante ou variable(s) de sortie, auxquels ledit neurone artificiel 22 est connecté en sortie.

À chaque neurone artificiel 22 est également associée une opération, c'est-à-dire un type de traitement, à effectuer par ledit neurone artificiel 22 au sein de la couche de traitement correspondante.

Chaque neurone artificiel 22 est alors typiquement apte à effectuer une somme pondérée de valeur(s) reçue(s) en entrée de la part du ou des éléments connectés à son entrée, chaque valeur d'entrée étant alors multipliée par une valeur de poids respective, puis à appliquer une fonction d'activation, typiquement une fonction non-linéaire, à ladite somme pondérée, et à délivrer au(x) élément(s) connecté(s) à sa sortie la valeur résultant de l'application de ladite fonction d'activation. Comme connu en soi, la fonction d'activation, également appelée fonction de seuillage ou fonction de transfert, permet d'introduire une non-linéarité dans le traitement effectué par chaque neurone artificiel 22. Des exemples classiques d'une telle fonction d'activation sont la fonction sigmoïde, la fonction tangente hyperbolique, et la fonction de Heaviside.

En complément facultatif, le neurone artificiel 22 est également apte à appliquer en outre un facteur multiplicatif, également appelé biais, à la sortie de la fonction d'activation, et la valeur délivrée au(x) élément(s) connecté(s) en sortie est alors le produit de la valeur de biais et de la valeur en sortie de la fonction d'activation.

Le réseau de neurones RN est par exemple un réseau de neurones convolutifs, et les couches de traitement CT1, CT2, CT3 sont alors typiquement chacune choisies parmi le groupe consistant en : une couche de convolution, une couche de mise en commun, une couche de correction, une couche entièrement connectée (de l'anglais *fully connected)* et une couche de perte. L'opération associée à chaque neurone artificiel 22 est alors typiquement choisie parmi le groupe consistant en : une opération de convolution, une opération de mise en commun, une opération de correction, une opération entièrement connectée et une opération de perte.

L'homme du métier comprendra que l'invention s'applique de manière générale à de nombreux types de réseaux de neurones RN, notamment à des réseaux de neurones RN où les différentes couches de traitement CTi sont agencées sous forme d'une chaine simple de couches de traitement CTi successives, tel que représenté schématiquement à la figure 2. De tels réseaux de neurones RN avec couches de traitement CTi disposées successivement en forme d'une unique chaine simple sont par exemple des réseaux de neurones convolutifs, également notés CNN et tels que décrits ci-dessus ; des réseaux de neurones entièrement connectés, également notés FC (de l'anglais *fully connected)* ; des réseaux de neurones récurrents (de l'anglais *recurrent NN)* ; des réseaux de neurones avec une première partie entièrement convolutive suivie d'une deuxième partie entièrement déconvolutive (de l'anglais *fully convolutional* /*deconvolutional)* ; ou encore des réseaux de neurones avec auto-encodeur (de l'anglais *auto-encoder network).*

L'homme du métier comprendra que l'invention s'applique également à des réseaux de neurones RN où les différentes couches de traitement CTi sont agencées sous forme de plusieurs chaines, ou branches, de couches de traitement CTi, ces chaines étant au moins en partie parallèles les unes des autres. L'invention s'applique alors notamment à des réseaux de neurones RN dits résiduels, tel que représenté schématiquement à la figure 4. Dans l'exemple de la figure 4, le réseau de neurones RN comporte deux parties à branches multiples, une première partie à deux branches correspondant à la couche de traitement CT4 connectée d'une part directement en sortie de la couche de traitement CT2 et d'autre part en sortie de la couche de traitement CT3.1, qui est elle-même connectée en sortie de la couche de traitement CT2. Une deuxième partie à deux branches correspond à la couche de traitement CT6 connectée en sortie d'une part de la couche de traitement CT5.1 et d'autre part de la couche de traitement CT5.2, chacune étant elle-même connectée en sortie de la couche de traitement CT4.

L'ensemble 12 de blocs de calcul 14 comprend, selon l'invention, des blocs de calcul 14 d'au moins deux types différents parmi le groupe de types consistant : un premier type avec topologie figée, opération figée et paramètres figés, également noté TOPF ; un deuxième type avec topologie figée, opération figée et paramètres modifiables, également noté TOF ; et un troisième type avec topologie modifiable, opération modifiable et paramètres modifiables, également noté TOPP.

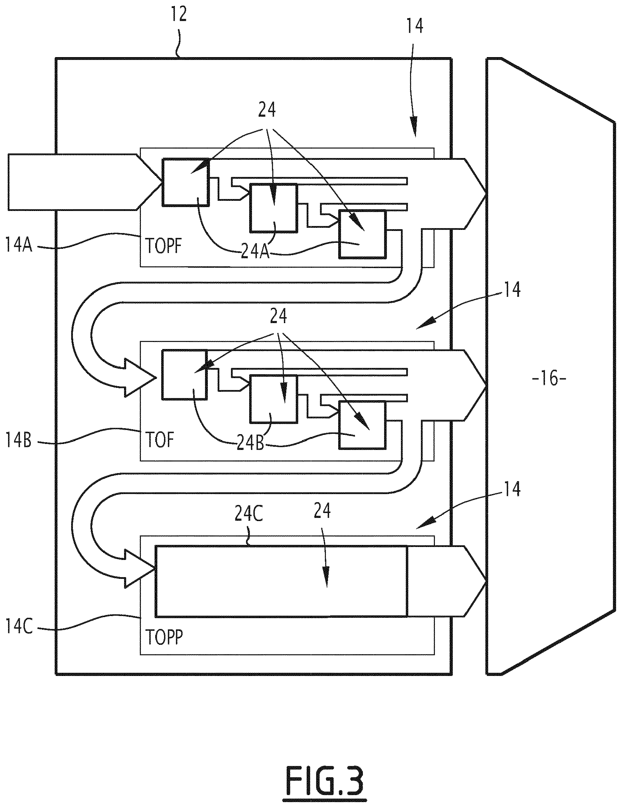

Dans les exemples des figures 3, 5 et 6, l'ensemble 12 comprend un premier bloc de calcul 14A du premier type TOPF, un deuxième bloc de calcul 14B du deuxième type TOF et un troisième bloc de calcul 14C du troisième type TOPP.

Pour la ou les couches de traitement mises en œuvre par le bloc de calcul 14 respectif, tel que le premier bloc de calcul 14A, le deuxième bloc de calcul 14B ou encore le troisième bloc de calcul 14C, la topologie est la topologie de connexion de chaque neurone artificiel 22 inclus dans la couche de traitement CTi correspondante, l'opération est le type de traitement à effectuer pour chaque neurone artificiel 22 de ladite couche de traitement CTi correspondante, et les paramètres sont les valeurs associées à chaque neurone artificiel 22 de ladite couche de traitement CTi correspondante et aptes à être déterminées via un apprentissage du réseau de neurones RN, ces paramètres comportant typiquement pour chaque neurone artificiel 22 une valeur de poids et/ou une valeur de biais.

L'homme du métier comprendra alors que, pour chaque bloc de calcul 14 du premier type TOPF, la topologie de connexion, le type de traitement à effectuer et les paramètres de chaque neurone artificiel 22 de la ou des couches de traitement CTi respectivement mises en œuvre par ledit bloc de calcul du premier type TOPF sont alors figés, c'est-à-dire fixés, préalablement à l'implémentation, i.e. l'instanciation, dudit bloc de calcul 14 de premier type TOPF, et ne sont alors plus modifiables après l'implémentation dudit bloc de premier type TOPF.

Pour chaque bloc de calcul 14 du deuxième type TOF, la topologie de connexion et le type de traitement à effectuer pour chaque neurone artificiel 22 de la ou des couches de traitement CTi respectivement mises en œuvre par ledit bloc du deuxième type TOF sont également figés, ou encore fixés, avant l'implémentation dudit bloc de deuxième type TOF ; et les paramètres associés audit neurone artificiel 22 de la ou des couches de traitement CTi mises en œuvre par le bloc de calcul de deuxième type TOF sont quant à eux modifiables, et sont alors susceptibles d'être modifiés, y compris après l'implémentation dudit bloc de calcul du deuxième type TOF.

Enfin, pour chaque bloc de calcul 14 du troisième type TOPP, l'homme du métier comprendra que la topologie de connexion, le type de traitement à effectuer et les paramètres de chaque neurone artificiel 22 de la ou des couches de traitement CTi respectivement mises en œuvre par ledit bloc de calcul du troisième type TOPP sont tous modifiables, et sont notamment susceptibles d'être modifiés après l'implémentation dudit bloc de calcul du troisième type TOPP.

Chaque bloc de calcul 14 comporte au moins un module de calcul 24, c'est-à-dire comporte un ou plusieurs modules de calcul 24. Chaque module de calcul 24 est de préférence configuré pour mettre en œuvre une couche de traitement CTi respective. Chaque module de calcul 14 est également noté PE (de l'anglais *Process Element).*

Dans les exemples des figures 3, 5 et 6, le premier bloc de calcul 14A comporte plusieurs modules de calcul 24, également appelés premiers modules de calcul 24A ; le deuxième bloc de calcul 14B comporte également plusieurs modules de calcul 24, également appelés deuxièmes modules de calcul 24B ; et le troisième bloc de calcul 14C comporte un unique module de calcul 24, également appelé troisième module de calcul 24C.

L'homme du métier observera alors que chaque module de calcul 24 est du même type que le bloc de calcul 14 au sein duquel il est inclus. Dans les exemples des figures 3, 5 et 6, chaque premier module de calcul 24A est alors un module de calcul du premier type TOPF, chaque deuxième module de calcul 24B est un module de calcul du deuxième type TOF, et le troisième module de calcul 24C est un module de calcul du troisième type TOPP.

Le bloc de calcul 14 du premier type TOPF est par exemple un bloc de calcul tel que décrit dans le document WO 2020/043753 A1 et pour lequel les paramètres, en particulier les pondérations associées aux neurones artificiels, sont figés. Le bloc de calcul 14 du premier type TOPF correspond alors au calculateur CONV décrit dans ledit document avec paramètres de neurones artificiels figés, chaque module de calcul 24 du premier type TOPF correspondant alors à un ensemble PE_BLOC respectif décrit dans ce document WO 2020/043753 A1.

Le bloc de calcul 14 du deuxième type TOF est par exemple un bloc de calcul tel que décrit dans le document WO 2020/043753 A1 et pour lequel les paramètres, en particulier les pondérations associées aux neurones artificiels, sont modifiables. Le bloc de calcul 14 du deuxième type TOF correspond alors au calculateur CONV et chaque module de calcul 24 du deuxième type TOF correspondant à un ensemble PE_BLOC respectif, avec aussi la possibilité de modifier les paramètres des neurones artificiels, en particulier leur valeur de poids.

Le bloc de calcul 14 du troisième type TOPP est par exemple un bloc de calcul tel que décrit dans les documents FR 3 045 892 A1 et WO 2017/108398 A1, pour lequel l'interconnexion des neurones, le type de traitement effectué par les neurones et les pondérations des neurones sont programmables, et sont alors modifiables.

En complément facultatif, les blocs de calcul 14 de l'ensemble 12 sont de trois types différents parmi le groupe de types consistant en : le premier type TOPF, le deuxième type TOF, et le troisième type TOPP. Autrement dit, l'ensemble 12 comporte au moins trois blocs de calcul 14 de types différents, c'est-à-dire comporte au moins un bloc de calcul 14 du premier type TOPF, au moins un bloc de calcul 14 du deuxième type TOF, et au moins un bloc de calcul 14 du troisième type TOPP. Les exemples des figures 3, 5 et 6 illustrent ce complément facultatif, l'ensemble 12 représenté sur les figures 3, 5 et 6 comprenant trois blocs de calcul 14 de trois différents, le premier bloc de calcul 14A étant du premier type TOPF, le deuxième bloc de calcul 14B étant du deuxième type TOF, et le troisième bloc de calcul 14C étant du troisième type TOPP.

En complément facultatif encore, les blocs de calcul 14 de types différents sont de préférence connectés en cascade, c'est-à-dire les uns à la suite des autres. Dans les exemples des figures 3, 5 et 6, le premier bloc de calcul 14A, le deuxième bloc de calcul 14B et le troisième bloc de calcul 14C sont connectés en cascade. En particulier, le premier bloc 14A est connecté en entrée du deuxième bloc 14B qui est lui-même connecté en entrée du troisième bloc 14C.

En complément facultatif encore, les blocs de calcul 14 de types différents sont de préférence connectés selon un ordre croissant des types. Autrement dit, un bloc de calcul 14 du premier type TOPF est selon ce complément facultatif connecté en entrée d'un bloc de calcul 14 du deuxième type TOF ou bien du troisième type TOPP. Un bloc de calcul 14 du deuxième type TOF est alors, selon ce complément facultatif, connecté en sortie d'un bloc de calcul 14 du premier type TOPF et/ou en entrée d'un bloc de calcul 14 du troisième type TOPP. Un bloc de calcul 14 du troisième type TOPP est alors, selon ce complément facultatif, connecté en sortie d'un bloc de calcul 14 du premier type TOPF et/ou en sortie d'un bloc de calcul 14 du deuxième type TOF.

Selon ce complément facultatif, les types des blocs de calcul 14 connectés en cascade sont de préférence successivement le premier type TOPF, le deuxième type TOF, et le troisième type TOPP. L'homme du métier observera alors que dans les exemples des figures 3, 5 et 6, les premier 14A, deuxième 14B et troisième 14C blocs de calcul sont connectés en cascade et dans cet ordre.

Selon ce complément facultatif, chaque bloc de calcul 14 de premier type TOPF est de préférence encore configuré pour mettre en œuvre une ou plusieurs couches initiales de traitement du réseau de neurones RN, chaque bloc de calcul 14 de deuxième type TOF étant configuré pour mettre en oeuvre une ou plusieurs couches intermédiaires de traitement du réseau de neurones RN, et chaque bloc de calcul 14 du troisième type TOPP étant configuré pour mettre en oeuvre une ou plusieurs couches finales de traitement du réseau de neurones RN, les couches initiales, intermédiaires et finales étant empilées dans cet ordre depuis l'entrée du réseau de neurones RN vers sa sortie.

Dans l'exemple des figures 2 et 3, le premier bloc de calcul 14A du premier type TOPF est alors par exemple configuré pour mettre en oeuvre la première couche de traitement CT1, formant une couche initiale de traitement du réseau de neurones RN de la figure 2 ; le deuxième bloc de calcul 14B du deuxième type TOF est configuré pour mettre en oeuvre la deuxième couche de traitement CT2 formant une couche intermédiaire du réseau de neurones RN de la figure 2 ; et le troisième bloc de calcul 14C est configuré pour mettre en oeuvre la troisième couche de traitement CT3 formant une couchant finale de traitement du réseau de neurones RN de l'exemple 2 de la figure2.

Lorsqu'un bloc de calcul 14 respectif comporte plusieurs modules de calcul 24, lesdits modules de calcul 24 sont de préférence connectés en cascade au sein dudit bloc de calcul. Dans l'exemple de la figure 3, les premiers modules de calcul 24A sont alors connectés en cascade au sein du premier bloc de calcul 14A, et les deuxièmes modules de calcul 24B sont également connectés en cascade au sein du deuxième bloc de calcul 14B. Autrement dit, dans l'exemple de la figure 3, lorsque plusieurs modules de calcul 24 sont inclus au sein d'un même bloc de calcul 14, tels que les premiers modules de calcul 24A inclus dans le premier bloc de calcul 14A, et respectivement les deuxièmes modules de calcul 24B inclus dans le deuxième bloc de calcul 14B, ces modules de calcul 24 sont par exemple agencés sous forme d'une unique chaine de modules 24 au sein du bloc de calcul 14 correspondant. Les blocs de calcul 14 selon cet exemple de réalisation de la figure 3 sont alors particulièrement adaptés pour mettre en oeuvre des réseaux de neurones RN où les différentes couches de traitement CTi sont agencées sous forme de la simple chaine de couches de traitement CTi successives, visible à la figure 2.

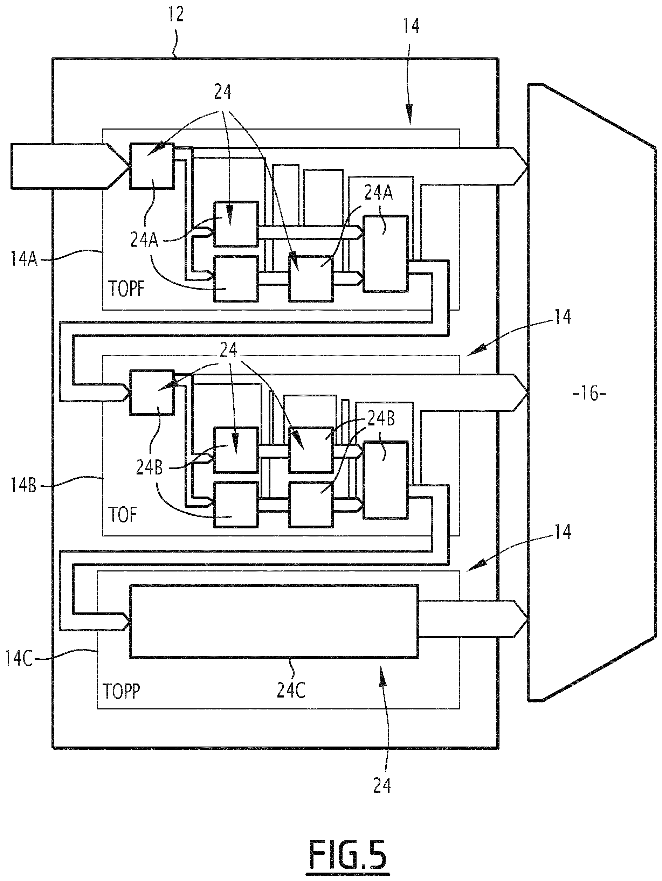

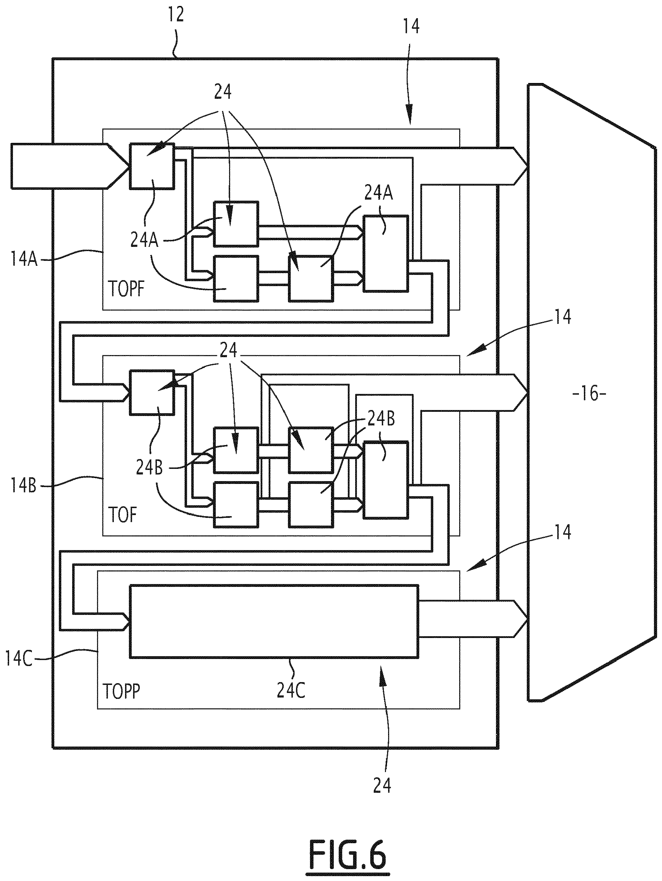

En variante, ces multiples modules de calcul 24 au sein d'un même bloc de calcul 14 sont agencés sous forme de plusieurs chaines de modules 24 au sein dudit bloc de calcul 14, comme représenté dans les exemples de réalisation des figures 5 et 6. Les blocs de calcul 14 selon ces exemples de réalisation des figures 5 et 6 sont alors particulièrement adaptés pour mettre en oeuvre des réseaux de neurones RN où les différentes couches de traitement CTi sont agencées sous forme de plusieurs chaines de couches de traitement CTi, notamment les réseaux de neurones RN dits résiduels, tel que celui visible à la figure 4.

Sur les figures 5 et 6, le premier bloc de calcul 14A comporte cinq premiers modules de calcul 24A, et le premier module de calcul 24A disposé en terminaison du premier bloc de calcul 14A, i.e. le premier module de calcul 24A de quatrième rang, est par exemple connecté d'une part directement en sortie d'un premier module de calcul 24A de deuxième rang et d'autre part en sortie d'un premier module de calcul 24A de troisième rang, qui est lui-même connecté en sortie d'un premier module de calcul 24A de deuxième rang. Le premier bloc de calcul 14A est alors particulièrement adapté pour mettre en œuvre la première partie du réseau de neurones RN de la figure 4, notamment les couches de traitement CT1, CT2, CT3.1 et une partie de CT4.

Sur les figures 5 et 6, le deuxième bloc de calcul 14B comporte six deuxièmes modules de calcul 24B, et les deuxièmes modules de calcul 24B de deuxième et troisième rangs au sein du deuxième bloc de calcul 14B sont par exemple connectés sous forme de deux branches parallèles. Le deuxième bloc de calcul 14B est alors particulièrement adapté pour mettre en œuvre la deuxième partie du réseau de neurones RN de la figure 4, notamment les couches de traitement CT5.1 et CT5.2 via les deuxièmes modules de calcul 24B de deuxième et troisième rangs agencés sous forme de deux branches parallèles.

Le multiplexeur 16 est connecté en sortie de l'ensemble 12 de blocs de calcul 14. Le multiplexeur 16 est typiquement connecté en sortie d'au moins deux modules de calcul 24 distincts, les modules de calcul 24 en sortie desquels le multiplexeur 16 est connecté étant les modules de calcul 24 d'un même bloc de calcul 14 ou bien les modules de calcul 24 de blocs de calcul 14 distincts, notamment de blocs de calcul 14 de types différents parmi le premier type TOPF, le deuxième type TOF et le troisième type TOPP.

En complément facultatif, le multiplexeur 16 est connecté en sortie de chacun des blocs de calcul 14 de types différents de l'ensemble 12. Autrement dit, si l'ensemble 12 comporte des blocs de calcul 14 de deux types différents parmi le premier type TOPF, le deuxième type TOF et le troisième type TOPP, le multiplexeur 16 est connecté en sortie d'au moins deux de ces blocs de calcul 14 de deux types différents ; et si l'ensemble 12 comporte au moins trois blocs de calcul 14 des trois types différents parmi les types précités, le multiplexeur 16 est alors connecté en sortie d'au moins un bloc de calcul du premier type TOPF, en sortie d'au moins un bloc de calcul du deuxième type TOF et en sortie d'au moins un bloc de calcul du troisième type TOPP. Dans les exemples des figures 3, 5 et 6, le multiplexeur 16 est connecté en sortie à la fois du premier bloc de calcul 14A du premier type TOPF, du deuxième bloc de calcul 14B du deuxième type TOF et du troisième bloc de calcul 14C du troisième type TOPP.

En complément facultatif encore, le multiplexeur 16 est connecté en sortie de chacun des modules de calcul 24 des différents blocs de calcul 14. Dans les exemples des figures 3 et 5, le multiplexeur 16 est en particulier connecté en sortie de tous les premiers modules de calcul 24A du premier bloc de calcul 14A, ainsi qu'en sortie de tous les deuxièmes modules de calcul 24B du deuxième bloc de calcul 14B, ainsi qu'en sortie du troisième module de calcul 24C du troisième bloc de calcul 14C.

En variante, le multiplexeur 16 est connecté en sortie de seulement certains des modules de calcul 24. Dans l'exemple de la figure 6, le multiplexeur 16 est en particulier connecté en sortie de seulement certains premiers modules de calcul 24A du premier bloc de calcul 14A, ainsi qu'en sortie de seulement certains deuxièmes modules de calcul 24B du deuxième bloc de calcul 14B.

Le bloc de prétraitement 18 est configuré pour transformer des données qui sont reçues en entrée du réseau de neurones RN et délivrer les données transformées à au moins un bloc de calcul 14 correspondant. La transformation effectuée par le bloc de prétraitement 18 sur les données reçues en entrée du réseau de neurones RN est, par exemple, une transformation géométrique, une transformation colorimétrique, ou un filtrage, ou encore une combinaison de tout ou partie de ces transformations géométrique, colorimétrique et filtrage.

Le bloc de post-traitement 20 est configuré pour transformer les données issues d'au moins un bloc de calcul 14 en données délivrées en sortie du réseau de neurones RN. Le bloc de post-traitement 20 est par exemple connecté en sortie du multiplexeur 16, et les données issues du bloc de calcul 14 correspondant et aptes à être transformées par le bloc de post-traitement 20 sont alors sélectionnées par le multiplexeur 16. La transformation effectuée par le bloc de post-traitement 20 sur les données issues d'au moins un bloc de calcul 14 est, par exemple, une sélection, une concaténation de données issues de plusieurs sorties, une mise à l'échelle (de l'anglais *rescaling),* ou un tri, ou encore une combinaison de tout ou partie de ces sélection, concaténation, mise à l'échelle et tri.

L'ensemble 12 constitué d'au moins deux blocs de calcul 14 de types différents parmi le premier type TOPF avec topologie figée, opération figée et paramètres figés, le deuxième type TOF avec topologie figée, opérations figée et paramètres modifiables, et le troisième type TOPP avec topologie modifiable, opérations modifiable et paramètre modifiables, lesdits au moins deux blocs de calcul 14 de types différents étant connectés dans un ordre quelconque au sein de l'ensemble 12, permet alors d'obtenir un calculateur électronique 10 selon l'invention offrant une flexibilité hétérogène. La flexibilité offerte par chaque type de bloc de calcul 14 parmi le premier type TOPF, le deuxième type TOF et le troisième type TOPP est en effet variable d'un type à l'autre.

Le bloc de calcul 14 du premier type TOPF présente typiquement une architecture pipeline, et est constitué d'un ensemble de module(s) de calcul 24 avec topologie, opération et paramètres figés. Chaque module de calcul 24 du premier type TOPF est alors typiquement construit et optimisé pour une seule topologie et opération du réseau de neurones RN ; et les paramètres - tels que valeur de poids et valeurs de biais - de cette partie du réseau correspondant au module de calcul 24 du premier type TOPF sont également figés. Ces modules de calcul 24 du premier type TOPF sont de préférence chaînés les uns aux autres et une partie ou la totalité de leurs sorties sont ensuite connectées au multiplexeur 16 pour permettre leur sélection. Les sorties du ou des derniers modules de calcul 24 du bloc de calcul 14 du premier type TOPF sont alors connectées au bloc de calcul 14 suivant.

Le bloc de calcul 14 du deuxième type TOF présente lui aussi typiquement une architecture pipeline, et le ou les modules de calcul 24 du deuxième type TOF inclus dans ledit bloc de calcul de deuxième type TOF sont également à topologie et opération fixes, ou figés ; à la différence que les paramètres, en particulier les valeurs de poids et/ou de biais, des neurones artificiels 22 correspondants sont modifiables. Cette possibilité de modifier les paramètres pour le bloc de calcul 14 du deuxième type TOF permet alors d'adapter la partie du réseau mise en œuvre par ce bloc de calcul 14 du deuxième type TOF à l'application cible. Lesdits paramètres sont typiquement modifiables au démarrage, ou bien en cours de fonctionnement, dans le cas par exemple d'un apprentissage en ligne du réseau de neurones RN.

Le bloc de calcul 14 du troisième type TOPP est quant à lui un calculateur dont la topologie d'entrée et/ou de sortie est fixe, et dépend typiquement de la sortie du bloc de calcul 14 précédent et/ou des entrées du bloc de calcul 14 suivant, mais dont la topologie, l'opération et les paramètres de la partie du réseau de neurones correspondant à ce bloc de calcul 14 du troisième type TOPP sont modifiables, c'est-à-dire programmables.

En complément facultatif, le multiplexeur 16 permet de sélectionner, concaténer et/ou combiner une ou plusieurs sorties de l'ensemble 12 de blocs de calcul 14, et forme alors un multiplexeur de couches, les différentes sorties de l'ensemble 12 correspondant à différentes sorties de couches de traitement CTi du réseau de neurones RN, mises en œuvre par ledit ensemble 12.

Selon ce complément facultatif, le multiplexeur 16 permet alors d'offrir une plus grande souplesse applicative. À titre d'exemple, pour un même réseau de neurones RN mis en œuvre, il est alors possible de lire uniquement la sortie de la dernière couche de traitement du réseau de neurones RN dans le cas d'une application de classification ; ou bien de lire les sorties de couches intermédiaires du réseau de neurones RN dans le cadre d'une application de segmentation ; ou encore de lire un ensemble de sorties de différentes couches dans le cas d'un détecteur d'objets, avec optionnellement un étage agrégeant des couches caractéristiques par hiérarchie.

Avec le calculateur électronique 10 selon l'invention, différentes réalisations matérielles sont en outre envisageables, le calculateur électronique 10 étant réalisable sous forme d'un ou plusieurs composants logiques programmables, tels qu'un ou plusieurs FPGA ; ou encore sous forme d'un ou plusieurs circuits intégrés dédiés, tel qu'un ou plusieurs ASIC.

Dans la cas d'une réalisation à base de composant(s) logique(s) programmable(s), le calculateur électronique 10 est par exemple instancié, c'est-à-dire implémenté, sur un FPGA avec cœur, le FPGA instanciant alors typiquement l'ensemble 12 de blocs de calcul 14, et le cœur instanciant quant à lui le bloc de prétraitement 18 et/ou le bloc de post-traitement 20.

Dans le cas d'une réalisation à base de circuit(s) intégré(s) dédié(s), le calculateur électronique 10 est par exemple réalisé sous forme d'un ASIC comportant en outre un interposeur (de l'anglais *chipset)* apte à recevoir plusieurs puces électroniques. Avec cet interposeur, l'ensemble 12 des différents blocs de calcul 14 est typiquement réparti, ou encore partitionné, sur plusieurs puces électroniques distinctes. Chaque puce électronique est alors assemblée, i.e. couplée, via l'interposeur à l'ASIC en fonction du besoin calculatoire, ce qui permet d'offrir une souplesse de fonctionnement encore plus grande. Avec cet interposeur, chaque bloc de calcul 14 est typiquement réalisé sous forme d'une puce respective et dédiée.

On conçoit ainsi que l'invention permet de proposer un calculateur électronique 10 amélioré pour la mise en œuvre de réseaux de neurones artificiels, notamment de réseaux de neurones convolutionnel CNN.

## Revendications

1. Calculateur électronique (10) configuré pour mettre en oeuvre un réseau de neurones artificiels (RN) comportant plusieurs couches de traitement (CTi),
le calculateur (10) comprenant plusieurs blocs électroniques de calcul (14), chacun étant configuré pour mettre en œuvre une ou plusieurs couches de traitement (CTi) respectives,
**caractérisé en ce que** les blocs de calcul (14) sont d'au moins deux types différents parmi le groupe de types consistant en :
- un premier type (TOPF) avec topologie figée, opération figée et paramètres figés,
- un deuxième type (TOF) avec topologie figée, opération figée et paramètres modifiables, et
- un troisième type (TOPP) avec topologie modifiable, opération modifiable et paramètres modifiables,
pour la ou les couches de traitement (CTi) mises en oeuvre par le bloc de calcul (14) respectif, la topologie étant une topologie de connexion pour chaque neurone artificiel (22) de la ou des couches de traitement (CTi), l'opération étant un type de traitement à effectuer pour chaque neurone artificiel (22) de la ou des couches de traitement (CTi), et les paramètres comportant des valeurs aptes à être déterminées via un apprentissage du réseau de neurones (RN), telles qu'une valeur de poids et/ou une valeur de biais pour chaque neurone artificiel (22) de la ou des couches de traitement (CTi).

2. Calculateur (10) selon la revendication 1, dans lequel chaque bloc de calcul (14) comporte au moins un module de calcul (24), et le calculateur (10) comprend en outre un multiplexeur (16) connecté en sortie d'au moins deux modules de calcul (24) distincts, les modules de calcul (24) en sortie desquels le multiplexeur (16) est connecté étant des modules de calcul (14) d'un même bloc de calcul (14) ou bien de blocs de calcul (14) distincts, notamment de blocs de calcul (14) de types différents (TOPF, TOF, TOPP),
le multiplexeur (16) étant de préférence connecté en sortie de chacun des blocs de calcul (14) de types différents (TOPF, TOF, TOPP) ;
le multiplexeur (16) étant de préférence encore connecté en sortie de chacun des modules de calcul (24) ;
chaque module de calcul (24) étant de préférence configuré pour mettre en oeuvre une couche de traitement (CTi) respective.

3. Calculateur (10) selon la revendication 1 ou 2, dans lequel les blocs de calcul (14) sont de trois types différents (TOPF, TOF, TOPP) parmi le groupe de types consistant en : le premier type (TOPF), le deuxième type (TOF) et le troisième type (TOPP).

4. Calculateur (10) selon l'une quelconque des revendications précédentes, dans lequel les blocs de calcul (14) de types différents (TOPF, TOF, TOPP) sont connectés en cascade.

5. Calculateur (10) selon la revendication 4, dans lequel les blocs de calcul (14) de types différents (TOPF, TOF, TOPP) sont connectés suivant un ordre croissant des types,
les types (TOPF, TOF, TOPP) des blocs de calcul (14) connectés en cascade étant de préférence successivement le premier type (TOPF), le deuxième type (TOF) et le troisième type (TOPP),
chaque bloc de calcul (14) du premier type (TOPF) étant de préférence encore configuré pour mettre en œuvre une ou plusieurs couches initiales de traitement, chaque bloc de calcul (14) du deuxième type (TOF) étant configuré pour mettre en œuvre une ou plusieurs couches intermédiaires de traitement et chaque bloc de calcul (14) du troisième type (TOPP) étant configuré pour mettre en œuvre une ou plusieurs couches finales de traitement, les couches initiales, intermédiaires et finales étant empilées dans cet ordre depuis l'entrée du réseau de neurones (RN) vers sa sortie.

6. Calculateur (10) selon l'une quelconque des revendications précédentes, dans lequel le réseau de neurones (RN) est un réseau de neurones convolutifs, les couches de traitement (CTi) sont chacune choisies parmi le groupe consistant en : couche de convolution, couche de mise en commun, couche de correction, couche entièrement connectée et couche de perte ; et chaque opération est alors choisie parmi le groupe consistant en : opération de convolution, opération de mise en commun, opération de correction, opération entièrement connectée et opération de perte.

7. Calculateur (10) selon l'une quelconque des revendications précédentes, dans lequel le calculateur (10) comprend en outre un bloc de prétraitement (18) configuré pour transformer des données reçues en entrée du réseau de neurones (RN) et délivrer les données transformées à au moins un bloc de calcul (14).

8. Calculateur (10) selon l'une quelconque des revendications précédentes, dans lequel le calculateur (10) comprend en outre un bloc de post-traitement (20) configuré pour transformer les données issues d'au moins un bloc de calcul (14) en données délivrées en sortie du réseau de neurones (RN).

9. Calculateur (10) selon l'une quelconque des revendications précédentes, dans lequel le calculateur (10) est réalisé sous forme d'un ou plusieurs composants logiques programmables, tel qu'un ou plusieurs FPGA.

10. Calculateur (10) selon l'une quelconque des revendications 1 à 8, dans lequel le calculateur (10) est réalisé sous forme d'un ou plusieurs circuits intégrés dédiés, tel qu'un ou plusieurs ASIC,
au moins un circuit intégré dédié comportant un interposeur recevant plusieurs puces, et chaque bloc de calcul (14) étant réalisé sous forme d'une puce respective.
